# EUROPÄISCHE PATENTANMELDUNG

(11) **EP 2 034 089 A2**
(43) Veröffentlichungstag der Anmeldung: **11.03.2009**
(21) Anmeldenummer: 08405219.0
(22) Anmeldetag: 08.09.2008
(51) Int. Cl.: D07B 1/14, H02G 7/16

(54) **Heizbares Seil**

(30) Priorität: 10.09.2007 CH 14112007
(71) Anmelder: Fatzer AG Drahtseilwerk, 8590 Romanshorn (CH)
(72) Erfinder: Longatti, Bruno, 9063 Stein (CH)
(74) Vertreter: Roshardt, Werner Alfred

(57) **Zusammenfassung**

Es wird ein Seil beschrieben, welches insbesondere als Tragseil für Seilbahnen geeignet ist. Das Seil umfasst einen Kern (31) und mehrere den Kern umgebenden Aussenstränge, welche beispielsweise aus mehreren Drähten (32.1...32.6, 34.1...34.12) bestehen. Gekennzeichnet ist das Seil durch eine integrierte Frostschutzeinrichtung (33.1...33.6), welche von einem Seilende her bedienbar ist, bevorzugt um Eisbildung an einer Seilaussenseite zu verhindern bzw. gezielt zu entfernen. Die Frostschutzeinrichtung (33.1...33.6) ist dabei bevorzugt in zumindest einer der Aussenlitzen integriert, kann jedoch auch im Bereich des Kerns (31) des Seils oder in Einlagen integriert sein, welche Zwischenräume zwischen einzelnen Drähten (32.1...32.6, 34.1...34.12) des Seils ausfüllen. Da die Frostschutzeinrichtung (33.1...33.6) bevorzugt als Widerstandsheizung ausgebildet ist, lässt sich ihre Heizintensität durch Stromfluss genau einstellen. Durch längs des Seils veränderliche Querschnitte oder veränderliche Materialeigenschaften der Heizdrähte (33.1...33.6) ist es möglich, besonders intensiv zu heizende Abschnitte des Seils konzentriert zu heizen. Auf diese Weise kann der gesamte Energieverbrauch der beschriebenen Vorrichtung möglichst klein gehalten werden. Dabei können unterschiedlichste Konstellationen von Litzendrähten (32.1...32.6, 34.1...34.12), dem Kern (31) des Seils und den Frostschutzeinrichtungen (33.1...33.6) von der Integration der Frostschutzeinrichtungen (33.1...33.6) im Kern (31) des Seils bis zu deren Positionierung auf Teilen der äusseren Oberfläche des Seils auftreten.

## Beschreibung

### Technisches Gebiet

Die Erfindung betrifft ein Seil, insbesondere ein stehendes Seil für Seilbahnen, Seilbauwerke und/oder für die Energieübertragung, umfassend einen Kern und mehrere den Kern umgebende Aussenstränge.

### Stand der Technik

Ein Seil besteht aus einer Vielzahl von (verseilten) Aussensträngen, wie beispielsweise Drähte oder Litzen, welche um einen Kern geschlagen sind. Seile sind biegsam und werden zur Übertragung von Zugkräften und/oder elektrischer Energie verwendet. Für die Zugfestigkeit kann ausser der Zugfestigkeit des Materials und der Grösse des Querschnitts auch der Seilaufbau (Schlaglängenverhältnis etc.) entscheidend sein. Unter Litzen werden in diesem Zusammenhang Bündel aus mehreren miteinander verseilten Drähten oder Fasern verstanden.

Stehende Seile, wie z. B. Tragseile für Seilbahnen oder Kabel als Überlandleitungen, wie bei Hochspannungs- oder Telefonleitungen verwendet, sind teilweise starken Witterungseinflüssen und insbesondere einer grossen Vereisungsgefahr ausgesetzt. Derartige Vereisungen können dazu führen, dass das Seil nicht mehr ordnungsgemäss funktioniert und kein sicherer Betrieb der Seilbahn mehr möglich ist. Bei Überlandleitungen besteht ebenfalls häufig das Problem, dass bei entsprechender Witterung Vereisungen auftreten, die zum Unterbruch der Verbindung und im schlimmsten Fall zur Zerstörung der Leitung, beispielsweise wegen unter der zusätzlichen Last der Vereisungen umknickender Masten, führen können.

In der FR 2 723 677 (Flosi) wird eine Frostschutzvorrichtung für Seile offenbart, bei der ein Behälter mit heissem Wasser mit dem zu heizenden Seil in Kontakt gebracht wird. Der Behälter umfasst eine Kammer mit Frostschutzmittel, welches mit zwei elektrischen Leitern verschiedener Polarität in Kontakt steht. Bei Anlegen einer Spannung an die elektrischen Leiter fliesst ein Strom durch das Frostschutzmittel und heizt dieses auf. Die Wärme wird von dem Behälter auf den hiermit in Kontakt befindlichen Teil des Seils übertragen. Derartige Behälter können dabei längs des Seils angeordnet werden.

Die WO 97/03540 (MKS) beschreibt eine biegbare isolierte Heizung für ein Seil oder Rohr. Die Heizung umfasst dabei zwei Schichten glasfaserverstärkter Kunststofflagen, welche zusammenlaminiert sind und zwischen sich Widerstandsheizungsdrähte aufweisen. Die Heizung ist dabei so geformt, dass sie den Umfang des zu heizenden Seils oder Rohrs gut umschliesst. Um die Aussenfläche der Heizung ist eine Wärmedämmung, wie beispielsweise ein Polymerschaum, aufgebracht. Diese Dämmschicht vermindert Wärmeverluste in die Umgebung und bildet einen Schutz gegen Verbrennungen an der Heizung.

Die durch den Stand der Technik dargestellten Lösungen zum Heizen eines Seils eignen sich nicht für ein Tragseil für Seilbahnen, weil sie jeweils von aussen auf das zu heizende Seil aufgebracht werden. Ein Tragseil, auf dem schwere Lasten rollen, kann gemäss seiner Verwendung nicht mit derartigen Frostschutz-Einrichtungen ausgestattet werden. Die bekannten Lösungen sind zudem auf Grund relativ hoher mechanischer Anforderungen wie Flüssigkeitsdichtigkeit und Witterungsbeständigkeit fehleranfällig und wartungsintensiv.

### Darstellung der Erfindung

Aufgabe der Erfindung ist es, ein dem eingangs genannten technischen Gebiet zugehörendes Seil zu schaffen, welches gegen Eisbildung geschützt ist und/oder gezielt enteist werden kann.

Die Lösung der Aufgabe ist durch die Merkmale des Anspruchs 1 definiert. Gemäss der Erfindung umfasst das Seil eine integrierte Frostschutzeinrichtung, die von einem Seilende her oder durch lokal in einen Mantelbereich des Seils eingekoppelte Strahlungsenergie aktivierbar ist.

Eine im Seil integrierte Frostschutzeinrichtung erlaubt die Verwendung des Seils als Tragseil für Seilbahnen, weil der zum Führen beispielsweise der Rollen einer Seilbahnkabine ausgeführte Aussenbereich des Seils nicht durch auf das Seil aufgesetzte Elemente beeinträchtigt wird. Ebenso eignen sich die erfindungsgemässen Seile auch für Seilbauanwendungen, wie z. B. für Brücken, Dachabspannungen, Fassaden oder weitgespannte Zweckbauten. Eine Integration der Frostschutzeinrichtung macht diese zudem weitgehend unanfällig für äussere Einflüsse wie beispielsweise Witterung. Eine von einem Seilende oder von beiden Seilenden her bedienbare Frostschutzeinrichtung benötigt zudem keine aufwändige Betätigungs- oder Ansteuerungsvorrichtung entlang des Seils. Als integrierte Frostschutzeinrichtung ist sie dabei auch über die ganze Länge des Seils (oder einen Teil davon) ausgedehnt. Ist die Frostschutzeinrichtung z. B. als Heizdraht ausgeführt, kann die Aktivierung durch Beaufschlagen mit einem Strom erfolgen.

Bei einer Ausführung der Frostschutzeinrichtung als Frostschutzmittelaustragvorrichtung kann die Bedienung der Frostschutzeinrichtung durch Steuerung des Durchflusses eines Frostschutzmittels durch die Frostschutzmittelaustragvorrichtung erfolgen.

Die erfindungsgemässe Frostschutzeinrichtung kann neben ihrer Verwendung in einem Tragseil für Seilbahnen auch beispielsweise in Tragseilen oder Zugseilen anderer Verwendung oder in Hochspannungs- oder Telefonkabeln oder in anderen Überlandleitungen eingesetzt werden.

Es ist ebenso möglich, als Frostschutzelement eine strahlungsabsorbierende Drahtlage, insbesondere aus Aluminium, im Seil zu integrieren, welche induktiv heizbar ist. Das Material für die strahlungsabsorbierende Drahtlage unterscheidet sich in der Regel vom Material, welches für die übrigen Seilkomponenten verwendet wird. Damit kann elektromagnetische Strahlungsenergie lokal in bestimmte Bereiche des Seils eingekoppelt und anschliessend in der strahlungsabsorbierenden Drahtlage in Wärme umgesetzt werden. Diese Ausführungsform ist insbesondere bei Seilbahnseilen interessant, da die erforderliche Strahlungsquelle beispielsweise an einer Seilbahnkabine angeordnet werden kann. Somit kann Eis, welches sich am Seil gebildet hat, durch induktive Heizung lokal angeschmolzen und direkt anschliessend durch die Laufräder der Seilbahnkabine vollständig weggedrückt werden. Bei Stahlseilen wird die strahlungsabsorbierende Drahtlage bevorzugt in der äussersten Aussenlage des Seils integriert, um Strahlungsverluste zu vermindern.

Des Weiteren kann als Frostschutzelement ein Mikrowellen-absorbierendes Material integriert werden. Insbesondere geeignet sind Materialien auf Silikon-, Urethan- oder Neopren-Basis. Diese können beispielsweise in Form von dicken Folien um innere Seillagen oder als massive zylinderförmige Einlagen zwischen den Strängen des Seils vorliegen. Auch hier ist bei der Integration in Stahlseile eine Anordnung in der äussersten Aussenlage des Seils zu bevorzugen um Reflexionsverluste der Mikrowellen möglichst zu vermeiden. Es ist aber auch möglich, die Mikrowellen-absorbierenden Materialien als Frostschutzelemente in inneren Bereichen des Seils zu integrieren und die Mikrowellenstrahlung vom einen Seilende her durch einen im Seil eingebauten Mikrowellenleiter zu den Mikrowellen-absorbierenden Materialien zu leiten. Als Mikrowellenleiter eignen sich beispielsweise Hohlleiter mit rundem und insbesondere mit rechteckigem Hohlprofil.

Ebenso können als Frostschutzelemente auch Materialien mit einem hohen Absorptionsvermögen für Infrarotstrahlung vorgesehen sein. Insbesondere organische Polymerverbindungen, wie z. B. Polyurethane oder Polyamide, sind hierfür geeignet.

Es liegt auch im Rahmen der Erfindung, als Mikrowellen-absorbierendes Material oder zur Absorption von Infrarotstrahlung Flüssigkeiten, welche z. B. in einem im Seil integrierten Schlauch vorliegen, vorzusehen. Um ein Gefrieren der Flüssigkeiten zu vermeiden, werden bevorzugt Flüssigkeiten mit Gefrierpunkten deutlich unter dem Gefrierpunkt von Wasser eingesetzt. Geeignet sind beispielsweise Lösungen aus Wasser mit Gefrierschutzmitteln wie Glycerin, Glykol oder Ethanol.

Vorzugsweise umfasst die Frostschutzeinrichtung ein in einem der Aussenstränge integriertes Frostschutzelement. Dadurch kann eine direkte Einwirkung auf die Mantelfläche (bzw. Oberfläche) des Seils erreicht werden. Es können auch mehrere Aussenstränge mit einem Frostschutzelement versehen sein.

Die Aussenstränge sind vorzugsweise als Litzen aufgebaut, welche aus mehreren Drähten und aus Drähten unterschiedlicher Stärke zusammengesetzt sein können. Die Frostschutzeinrichtung kann dann beispielsweise als Teil der Aussenlitze oder ausserhalb der Aussenlitze im äusseren Bereich des Seils (aber nach wie vor innerhalb der Hüllkurve, insbesondere des einhüllenden Kreises des Seilquerschnitts) angeordnet sein.

In einer anderen bevorzugten Ausführungsform ist ein Frostschutzelement im Kern des Seils integriert. Der Kern ist dabei beispielsweise aus Kunststoff oder aus Stahl gefertigt und wird z. B. in an sich bekannter Art von sechs Aussenlitzen umgeben. Eine Positionierung des Frostschutzelements im Kern des Seils hat den Vorteil, dass die von der Frostschutzeinrichtung erzeugte Wärme gleichmässig über die äussere Litze auf die Aussenbereiche des Seils übertragen wird. Es entsteht eine über die Oberfläche des Seils im Wesentlichen homogene Wärmeverteilung. Zudem ist das Frostschutzelement im Kern besser gegen unerwünschte Umwelteinflüsse abgeschottet. Auch die radiale Druckbelastung des Seils, wie sie im Fall eines Tragseils einer Schwebebahn auftritt, wirkt sich kaum auf das Heizelement aus.

Die Aussenstränge brauchen nicht als Litzen ausgeführt sein, sondern können wie bei einem Kabel als schichtartig angeordnete Einzeldrähte oder Einzelfilamente ausgebildet sein. Es können mehrere Lagen von Aussensträngen vorgesehen sein.

Mit Vorteil weist das Seil zwischen den Seilelementen, insbesondere zwischen den Aussensträngen und dem Kern bzw. zwischen benachbarten Aussensträngen, Einlagen aus Kunststoff auf. Bevorzugt ist in mindestens einer der Einlagen ein Frostschutzelement integriert. Derartige Einlagen können die Lebensdauer und Stabilität des Seils verbessern. Sie bilden dabei bevorzugt eine Art Auflage für einzelne Seilelemente und können die inneren Bereiche des Seils gegen äussere Einflüsse, wie beispielsweise ein Eindringen von Wasser und Schmutz, schützen.

Alternativ können Frostschutzelemente auch in verschiedenen Zwischenräumen integriert sein, wie sie beispielsweise zwischen einzelnen Aussensträngen oder zwischen Aussensträngen und Kern gegeben sein können.

Die Frostschutzeinrichtung umfasst mit Vorteil einen elektrisch leitenden Draht, welcher anstelle eines Stahldrahts oder Filaments einer Aussenlitze eingesetzt sein kann. Da dieser beispielsweise aus Kupfer gefertigt ist und damit weniger zugfest ist als beispielsweise ein Stahldraht, kann dies die Zugbelastbarkeit der Aussenlitze verändern. Soll dies ausgeschlossen werden, ist der elektrische Draht nicht anstelle, sondern zusätzlich zu den tragenden Drähten der Litzen in das Seil zu integrieren. Die Frostschutzeinrichtung ersetzt bevorzugt keine Elemente des Seils, welche zur Stabilität wie beispielsweise Zug- oder Bruchfestigkeit des Seils beitragen, sondern wird zusätzlich zu diesen in die Litze integriert.

Das Frostschutzelement kann als Drahtgeflecht (beispielsweise auf einer Oberfläche zumindest einer der Einlagen oder im Kern) ausgeführt werden. Ein solches Drahtgeflecht ist der räumlichen Ausgestaltung des Seilelements anpassbar und erlaubt eine flächenhafte Erwärmung. Das Drahtgeflecht kann auch in den Einlagen integriert sein. Somit kann es präzise innerhalb des Seils geführt werden. Das Drahtgeflecht wird dabei bevorzugt so geführt, dass es zwar einen möglichst hohen Wirkungsgrad für die Enteisung besitzt, aber vor mechanischen Belastungen bestmöglich geschützt ist. Bei Einlagen aus elektrisch isolierendem Material wird das Drahtgeflecht automatisch auch elektrisch gegenüber seiner Umgebung isoliert. Je nach Anordnung der Einlagen ist es vorteilhaft, wenn das Drahtgeflecht nur auf der Oberfläche einer Einlage, auf den Oberflächen mehrerer Einlagen und/oder innerhalb der Einlagen verläuft.

Anstelle von Drahtgeflechten können auch blechartige Flächenheizelemente eingesetzt werden, welche wie die Drahtgeflechte beispielsweise zwischen zwei Seillagen um die innere der beiden Seillagen gewickelt werden können. Derartige Flächenheizelemente können entlang der gesamten Länge des Seils vorgesehen werden. Es ist aber auch möglich, lediglich an den besonders gefährdeten Stellen des Seils die Flächenheizelemente in Form von blechartigen Streifen bzw. Ringen anzubringen.

Alternativ kann das Drahtgeflecht auch auf anderen Flächen verlaufen; so kann es beispielsweise entlang einzelner Drähte, auf der Oberfläche des Kerns des Seils oder auf der Aussenfläche des Seils verlaufen. Es ist dabei zu beachten, dass das Drahtgeflecht im normalen Gebrauch des Seils abgenutzt oder mechanisch strapaziert wird.

Es ist möglich, dass die Einlagen unterschiedlich ausgebildete Abschnitte, insbesondere Abschnitte unterschiedlicher Wärmeleitfähigkeit, aufweisen. Die Einlagen können beispielsweise längs der Ausrichtung des Seils unterschiedliche Abschnitte aufweisen. Die unterschiedlichen Ausbildungen der Einlagen des Seils können dabei räumlicher Natur sein, also insbesondere eine Veränderung des von Einlagen gefüllten Volumens. Dies kann beispielsweise dazu führen, dass ein auf den Einlagen verlaufendes Drahtgeflecht oder eine in den Einlagen integrierte Frostschutzeinrichtung abwechselnd an die Oberfläche des Seils herangeführt und von ihr weggeführt werden. An Stellen des Seils, auf denen das Frostschutzelement an der Oberfläche des Seils verläuft, ist eine effizientere Heizleistung bezüglich der Oberfläche des Seils zu erwarten. Abschnitte unterschiedlicher Wärmeleitfähigkeit erlauben eine präzise Steuerung des Wärmeflusses im Innern des Seils und längs des Seils. In solchen Bereichen, in denen die Einlagen eine grössere Wärmeleitfähigkeit aufweisen, gelangt die durch die Frostschutzeinrichtungen erzeugte Wärme leichter, schneller und mit weniger Verlust beispielsweise an die Oberfläche des Seils. In solchen Bereichen, die eine kleinere Wärmeleitfähigkeit aufweisen, wird die Wärme schlechter transportiert. So kann die von der Frostschutzeinrichtung erzeugte Wärme konzentriert und an besonders effizienten oder frostgefährdeten Stellen eingesetzt werden. So ist auch eine periodische Anordnung von Bereichen mit Einlagen bestimmter Wärmeleitfähigkeit realisierbar. Bei der Verwendung von in den Einlagen geführten Heizelementen kann beispielsweise durch Bereiche unterschiedlicher Wärmeleitfähigkeit der Einlagen eine Verteilung der Temperatur im Seil und damit auf dessen Oberfläche festgelegt werden. Die Temperaturverteilung kann dabei sowohl auf die Längsrichtung des Seils als auch auf einzelne Winkelbereiche des Seils bezogen sein.

Alternativ kann das Seil auch Einlagen aufweisen, die entlang des gesamten Seils gleichartig ausgebildet sind. Es kann daneben auch auf Einlagen verzichtet werden.

Bevorzugt ist die Frostschutzeinrichtung als elektrische Widerstandsheizung ausgebildet. Dabei kann es sich bevorzugt um einen elektrisch leitenden Draht mit einem definierten elektrischen Widerstand handeln. Wenn der Draht von Strom durchflossen wird, heizt er sich auf und gibt Wärme an seine Umgebung ab. Eine derartige Ausführungsform der Frostschutzeinrichtung ist besonders wartungsarm und kann gut in das Seil integriert werden. Neben einem einzelnen Draht können beispielsweise auch ein Drahtbündel, ein Drahtgeflecht oder mehrere beabstandete einzelne Drähte vorgesehen sein.

Anstelle oder zusätzlich zu einer Widerstandsheizung sind auch andere Frostschutzeinrichtungen wie Frostschutzmittel oder mechanische Einrichtungen (z. B. Ultraschallelemente) zum Entfernen von Eis auf dem Seil denkbar.

Bevorzugt weist eine Frostschutzeinrichtung, welche als Widerstandsheizung fungiert, Abschnitte unterschiedlichen elektrischen Widerstands auf. Somit kann beispielsweise entlang des Seils vorgesehen sein, dass an bestimmten Bereichen eine grössere Heizwirkung stattfindet als an anderen. Bevorzugt umfasst das Frostschutzelement solche Bereiche mit höherem elektrischem Widerstand als andere Bereiche des Frostschutzelements. Bei konstantem Stromfluss durch die Frostschutzeinrichtung wird in den Bereichen grösseren elektrischen Widerstands mehr Wärme erzeugt als in den Bereichen kleineren elektrischen Widerstands, wo der Strom unter kleinerem Spannungsabfall durchgeleitet wird und dementsprechend weniger Wärme erzeugt. Die Frostschutzeinrichtung lässt sich daher in funktioneller Hinsicht in eine Heizung und eine Leitung aufteilen. Die Heizung kann einen im Verhältnis zur Leitungslänge kurzen Seilabschnitt betreffen. Dieses Konzept führt zu einer Einsparung an benötigter Heizleistung und erlaubt eine Konzentration der Wärme an besonders wichtigen, beispielsweise an besonders exponierten, Stellen des Seils. Die Bereiche hoher und niedriger elektrischer Leitfähigkeit bzw. die Bereiche niedrigen und hohen elektrischen Widerstands können beispielsweise durch eine Wahl unterschiedlicher Querschnitte des Drahts bzw. der Drähte oder durch eine Wahl unterschiedlicher Materialien realisiert werden. Neben längs des Seils angeordneten Abschnitten unterschiedlichen elektrischen Widerstands kann das Seil auch in radialer Richtung Frostschutzelemente unterschiedlichen Widerstands aufweisen. Dies kann beispielsweise durch in verschiedenen radialen Abständen vom Seilmittelpunkt positionierte Heizelemente realisiert werden, durch welche verschieden starke Ströme fliessen oder welche verschieden grosse Widerstände aufweisen. So kann beispielsweise sichergestellt werden, dass das Seil eine über seinen Radius weitgehend homogene Temperaturverteilung aufweist, was beispielsweise für Spannungen innerhalb des Seils und damit beispielsweise für die Langlebigkeit des Seils von Bedeutung sein kann.

Alternativ kann die Frostschutzeinrichtung auch beispielsweise durch einen Draht oder mehrere Drähte gebildet werden, welche über ihre Länge einen konstanten elektrischen Widerstand aufweisen.

Es liegt auch im Rahmen der Erfindung, die Frostschutzeinrichtung als Frostschutzmittelaustragvorrichtung auszubilden. Dies kann beispielsweise eine im Seil integrierte Leitung sein, durch welche an bestimmbaren Orten Frostschutzmittel auf die äussere Oberfläche des Seils ausgebracht werden kann. Bevorzugt ist die Leitung im äusseren Teil des Seils, insbesondere im äusseren Teil der Einlagen, welcher nicht unter dem radialen Druck der Aussenstränge steht, integriert. Zudem ist es vorteilhaft, wenn die Austrittsorte für das Frostschutzmittel direkt an der äusseren Oberfläche des Seils anliegen. Dabei können die Austrittsorte der Leitung durch Löcher in der Leitung gebildet sein. Es versteht sich, dass bei der Wahl des Frostschutzmittels zu beachten ist, dass sich dieses mit der Seilschmierung verträgt.

Wie weiter oben bereits erwähnt wurde, ist der Frostschutz in der Regel nur in ausgewählten Abschnitten des Seils vorgesehen. So kann auch bei Seilen mit einer Länge von z. B. mehreren hundert Metern eine energieeffiziente Enteisung ermöglicht werden. Die Frostschutzeinrichtung soll in erster Linie an solchen Stellen des Seils wirken, welche besonders anfällig für Frost oder Vereisung sind. Beispielsweise Stellen des Seils, die besonders witterungsexponiert sind, können mit einer besonders hohen Konzentration der Frostschutzwirkung bedacht werden, wogegen es auch andere Stellen des Seils geben kann, die durch die Wirkung der Frostschutzeinrichtung an benachbarten Stellen ebenfalls gegen Vereisung und dergleichen geschützt sind. Vorstellbar ist dabei auch, dass die Frostschutzeinrichtung einerseits auf ausgewählten Abschnitten des Seils und andererseits zu ausgewählten Zeiten bzw. über ausgewählte Zeiträume hinweg zum Einsatz kommt.

Alternativ oder zusätzlich kann das Seil auch über seine gesamte Länge mit der Frostschutzeinrichtung versehen sein.

Es kann des Weiteren auch vorteilhaft sein, im Innern des Seils, Wärmedämmelemente vorzusehen, welche das Seil, insbesondere in radialer Richtung, in einen inneren und einen äusseren Bereich aufteilen. Damit wird erreicht, dass die Wärme, welche von den Frostschutzelementen erzeugt wird, weniger effektiv in den jeweilig anderen Bereich des Seils gelangt, bzw. dass nicht die gesamte Seilmasse geheizt wird. Von Vorteil wird die Frostschutzvorrichtung im äusseren Bereich, ausserhalb der Wärmedämmelemente, angeordnet. Dadurch kann bei der Enteisung die Wärmeenergie gezielt auf den kritischen äusseren Bereich konzentriert werden, was den Energieverbrauch reduziert. Wärmedämmelemente können prinzipiell aus allen Materialien gefertigt werden, welche bezüglich Wärme eine isolierende Wirkung zeigen. In Frage kommen hierfür beispielsweise Kunststoffe oder faserhaltige Materialien. Als besonders geeignet haben sich z.B. geschäumte Kunststoffe, wie Polystyrol, Neopor oder Polyurethan erwiesen. Ebenso eignen sich aber auch Mineral-, Glaswolle oder Schaumglas als Materialien für Wärmedämmelemente. Die Wärmedämmelemente werden bevorzugt in den Bereichen des Seils angebracht in welchen auch Frostschutzvorrichtungen vorliegen.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: ein Seil im Querschnitt mit aussen liegenden Frostschutzeinrichtungen;
- Fig. 2: ein Seil im Querschnitt mit mehrdrahtiger äusserer Litze;
- Fig. 3: ein Seil im Querschnitt mit zwei Lagen von äusseren Litzen;
- Fig. 4: ein Seil im Querschnitt mit im Innern des Seils liegenden Frostschutzeinrichtungen;
- Fig. 5: ein Seil im Querschnitt mit im Kern des Seils liegenden Frostschutzeinrichtungen;
- Fig. 6: ein Seil im Querschnitt mit Einlagen und auf deren Oberfläche liegenden Frostschutzeinrichtungen;
- Fig. 7: ein Seil im Querschnitt mit in den Einlagen liegenden Frostschutzmittelaustragvorrichtungen;
- Fig. 8: ein Seil im Querschnitt mit einem durch ein Frostschutzelement ersetzten Draht einer Litze; und
- Fig. 9: ein Seil im Längsschnitt mit abschnittsweisem Widerstandsheizelement und Stromzuführung;
- Fig. 10: ein Seil im Längsschnitt mit einem extern geschlossenen Stromkreislauf;
- Fig. 11: einen Querschnitt eines erfindungsgemässen Tragseils mit drei durch ein Frostschutzelement ersetzten Drähten;
- Fig. 12: eine Variante des Tragseils aus Fig. 11 mit einem Frostschutzelement im Kern;
- Fig. 13: eine Variante des Tragseils aus Fig. 11 mit einem Frostschutzelement in einem aussen liegenden Profildraht;
- Fig. 14: eine Variante des Tragseils aus Fig. 11 mit einem Drahtgeflecht als Frostschutzelement zwischen den äussersten beiden Lagen aus Profildrähten.
- Fig. 15: eine Variante des Tragseils aus Fig. 14 mit einem zusätzlichen Dämmelement im Innern des Seils.

Grundsätzlich sind in den Figuren gleiche Teile mit gleichen Bezugszeichen versehen.

### Wege zur Ausführung der Erfindung

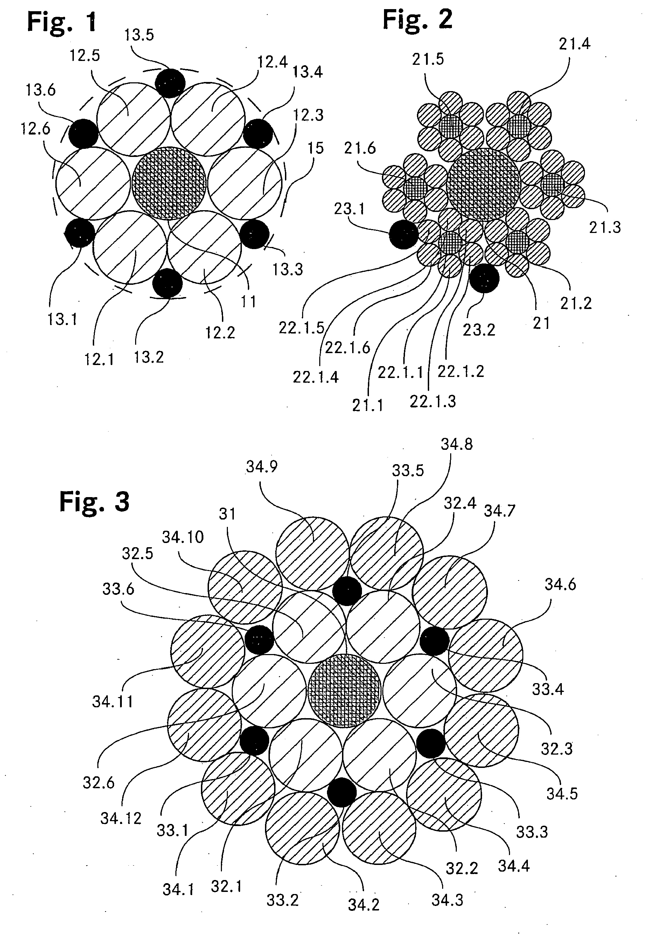

Die Figur 1 zeigt eine Prinzipdarstellung einer bevorzugten Ausführungsform eines Seils im Querschnitt. Das vereinfacht dargestellte Seil umfasst einen Kern 11 und sechs an den Kern anliegende und regelmässig um den Kern herum angeordnete Stränge 12.1...12.6, die als einzelne Drähte oder als Litzen aus mehreren Drähten ausgebildet sein können. Die Stränge 12.1...12.6 haben einen etwa gleichen Durchmesser wie der Kern 11, so dass sie im Wesentlichen am Kern 11 aufliegen und die benachbarten Stränge 12.2, 12.6 ...12.5, 12.1 berühren. Im Bereich des äusseren Umkreises 15 des Seils zwischen den benachbarten Strängen 12.1...12.6 sind insgesamt sechs Frostschutzelemente 13.1...13.6 angebracht. Die Frostschutzelemente 13.1...13.6 sitzen dabei teilweise in den Zwischenräumen zwischen benachbarten Strängen 12.6, 12.2... 12.5, 12.1 und kontaktieren jeweils zwei Stränge 12.6, 12.2...12.5, 12.1. Die Frostschutzelemente 13.1...13.6 sind derart angeordnet, dass sie innerhalb und vorzugsweise in einem Abstand zum Umkreis 15 liegen, welcher Kern 11 und Stränge 12.1...12.6 einhüllt. Es soll kein Teil der Frostschutzelemente 13.1...13.6 über den Umkreis hinausragen.

Der Querschnitt eines Frostschutzelements 13.1...13.6 kann im Verhältnis zu dem Freiraum, welcher zwischen den benachbarten Strängen und dem Umkreis gebildet wird, durchaus relativ klein sein (also kleiner als in Fig. 1 schematisch dargestellt). So kann der Querschnitt z. B. innerhalb eines Bereichs liegen, welcher durch eine Aussentangente an benachbarte Stränge 12.1/12.2 abgegrenzt wird.

Figur 2 zeigt ebenfalls eine bevorzugte Ausführungsform eines Seils im Querschnitt mit dem Kern 21, den äusseren sechs Drahtlitzen 21.1...21.6 und zwei Frostschutzelementen 23.1, 23.2. Wie aus dieser Darstellung ersichtlich ist, brauchen die Frostschutzelemente 23.1,23.2 nicht rotationssymmetrisch wie in Figur 1 angeordnet zu sein. Jede Drahtlitze besitzt z. B. einen zentralen Draht 21.1...21.6 und sechs äussere Drähte 22.1.1...22.1.6. Anstelle der (1 + 6)-Struktur kann auch eine [(1+6) + 6(1+6)]-Struktur oder eine andere Anordnung gewählt werden.

Figur 3 zeigt eine bevorzugte Ausführungsform eines Seils im Querschnitt. Zusätzlich zu dem in Figur 1 dargestellten Seil weist das in dieser Figur 3 dargestellte Seil eine weitere Lage von Drähten 34.1...34.12 auf. Es reihen sich also von innen nach aussen an den Kern 31 zunächst eine erste Lage aus sechs Drähten 32.1...32.6 an, die wie in Figur 1 arrangiert sind. Auf der Aussenseite der Drähte 32.1...32.6 sind sechs Frostschutzelemente 33.1...33.6 integriert, welche im Prinzip sinngemäss zu Figur 1 positioniert sind. An die erste äussere Lage schliesst eine zweite äussere Lage aus zwölf regelmässig angeordneten Drähten 34.1...34.12 an, die die äusserste Schicht des Seils bildet. Die Drähte 32.1...32.6 der ersten Lage werden von den Drähten 34.1...34.12 der zweiten Lage derart umschlossen, dass sich zwischen einzelnen Drähten [32.1, 32.2, 34.2, 34.3], [32.2, 34.4, 32.3, 34.5], [32.3, 34.6, 32.4, 34.7], [32.4, 34.8, 32.5, 34.8], [32.5, 34.10, 32.6, 34.11] und [32.6, 34.12, 32.1, 34.1] Zwischenräume ausbilden, in welchen die Frostschutzelemente 33.1...33.6 integriert sind.

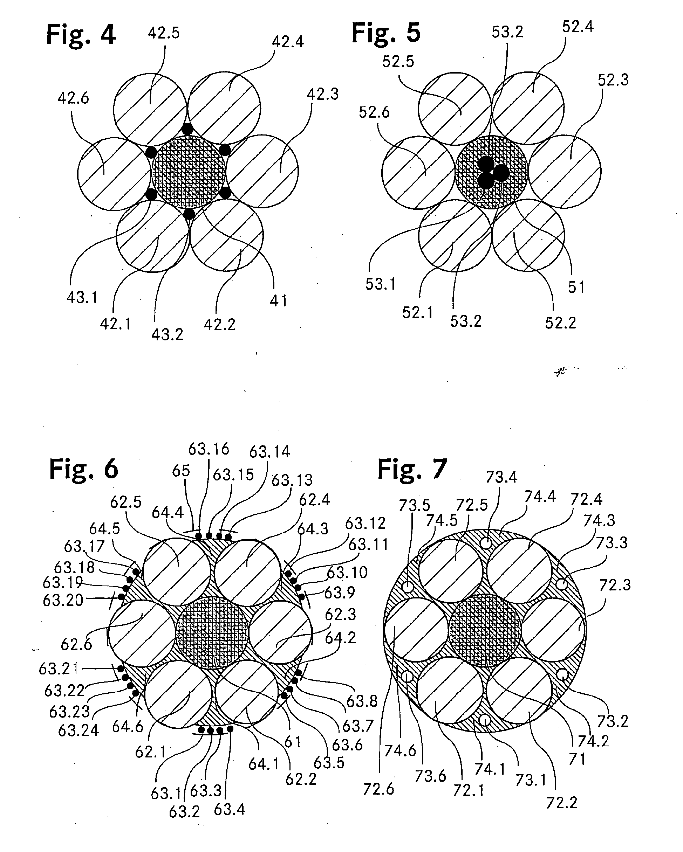

Figur 4 zeigt auch eine weitere erfindungsgemässe Ausführungsform eines Seils im Querschnitt. Es umfasst den Kern 41, die äusseren Stränge 42.1...42.6 und die sechs Frostschutzelemente 43.1...43.6. Im Gegensatz zu der in Figur 1 dargestellten Ausführungsform sind die Frostschutzelemente 43.1...43.6 zwischen den äusseren Strängen 42.1...42.6 und dem Kern 41 in das Seil integriert. Somit schliessen an den Kern 41 in radialer Richtung direkt sowohl die sechs Frostschutzelemente 43.1...43.6 als auch die Schicht von sechs Strängen 42.1...42.6 an. Die sechs Frostschutzelemente 43.1...43.6 sind gleichmässig über den Umfang des Kerns 41 verteilt. Sie können den Kern 41 und/oder die Stränge 42.6, 42.2...42.5, 42.1 kontaktieren. Sofern das Frostschutzelement als Heizdraht ausgeführt ist, erleichtert ein direkter Kontakt mit mindestens einem der äusseren Stränge den Wärmetransport zur Aussenseite des Seils. Der Querschnitt der Frostschutzelemente 43.1...43.6 ist mit Vorteil so klein, dass die Seilstruktur (d. h. die Anordnung und Geometrie von Kern und Aussensträngen) gegenüber einem Seil ohne Frostschutzelemente nicht verändert werden muss. Die Frostschutzelemente können in den geometrischen Zwischenräumen zwischen sich kontaktierenden Aussensträngen 42.1...42.6 und dem Kern 41 platziert werden, ohne dass sie damit einen Einfluss auf die radiale Ausdehnung des Seils haben.

Figur 5 zeigt eine weitere Variante eines Seils im Querschnitt mit dem Kern 51 und sechs diesen gleichmässig umgebenden Aussensträngen 52.1...52.6. In den Kern 51 des Seils sind drei Frostschutzelemente 53.1...53.3 integriert, die gleichmässig um die Kernachse herum positioniert sind. Der Kern besteht z. B. aus Kunststoff (z. B. Polyethylen), und die Frostschutzelemente 53.1...53.3 sind vollständig im Kern 51 eingegossen.

Die Anordnung des Kerns 51 und der Aussenstränge 52.1...52.6 kann ähnlich zu der in Figur 1 dargestellten Ausführungsform des Seils sein. Der Kern kann auch als Stahlseil (IWRC) ausgebildet sein.

Figur 6 zeigt eine weitere bevorzugte Ausführungsform eines Seils im Querschnitt. Neben dem Kern 61 und den sechs diesen gleichmässig umgebenden Aussensträngen 62.1...62.6, welche z. B. wie in Figur 1 angeordnet sind, sind die Zwischenräume zwischen den jeweils benachbarten Aussensträngen 62.1/62.2...62.6/62.1 und die Zwischenräume zwischen den Aussensträngen 62.1...62.6 und dem Kern 61 mit Einlagen 64.1...64.6 aus Kunststoff ausgefüllt. Die Einlagen 64.1...64.6 erstrecken sich in der Querschnittsansicht bis an den Hüllkreis des Seils.

Auf der nach aussen zeigenden Oberfläche der Einlagen 64.1...64.6 sind Heizdrähte 63.1...63.24 angebracht. Die Heizdrähte 63.1...63.24 bilden die Frostschutzeinrichtung und sind in dieser Ausführungsform als Drahtgeflecht auf der Oberfläche der Einlagen 64.1...64.6 angebracht. Bei dieser Ausführungsform ist der Durchmesser der Heizdrähte 63.1...63.24 kleiner als der Durchmesser der in den vorangegangenen Figuren dargestellten Frostschutzelemente. Die Aussenstränge 62.1...62.6 bilden in dieser Ausführungsform die radial äussersten Punkte und definieren somit je nach Form einer Auflagefläche einer auf dem Seil laufenden Rolle, wie stark sich die Rolle den Einlagen nähert. Damit die Heizdrähte 63.1...63.24, welche auf der seilaussenseitigen Oberfläche der Einlagen 64.1...64.6 verlaufen, nicht durch eine auf dem Seil laufende Rolle beschädigt oder abgenützt werden, sind die Einlagen 64.1...64.6 nicht bis an den Hüllkreis 65 geführt, sondern überschreiten vorzugsweise eine (gedachte) Abgrenzungslinie nicht, welche durch eine an benachbarte Aussenstränge gelegte Aussentangente definiert ist.

Figur 7 zeigt eine ähnliche Ausführungsform wie Figur 6. Neben dem Kern 71 und den sechs gleichmässig um den Kern 71 angeordneten (nur schematisch gezeigten) Drahtlitzen 72.1...72.6 sind die Zwischenräume zwischen den benachbarten Drahtlitzen 72.1...72.6 und dem Kern 71 mit Einlagen 74.1...74.6 ausgefüllt. Anders als in Figur 6 ist jedoch auf der Oberfläche der Einlagen 74.1...74.6 kein Drahtgeflecht aus Heizdrähten vorgesehen. Stattdessen befinden sich in einem oberflächennahen Bereich der Einlagen 74.1...74.6 sechs Leitungen 73.1...73.6 als Frostschutzmittelaustragvorrichtungen. Diese Leitungen 73.1...73.6 weisen an den gewünschten Stellen des Seils Öffnungen auf, welche an der äusseren Oberfläche der Einlagen münden. Somit kann ein Frostschutzmittel in der Einlage geführt und an der mit Öffnungen versehenen Stelle ausgetragen werden.

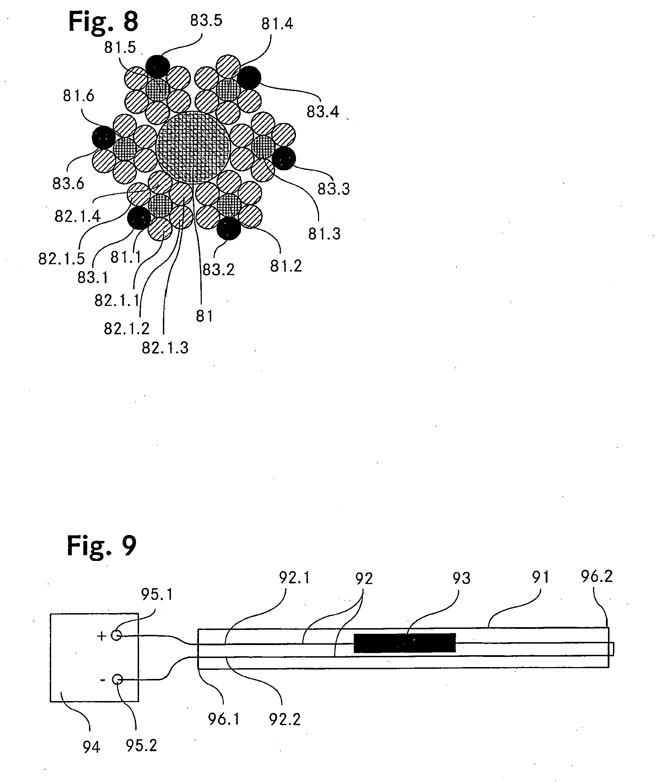

Figur 8 zeigt eine weitere bevorzugte Ausführungsform eines Seils im Querschnitt. Die in dieser Figur dargestellte Ausführungsform ist ähnlich aufgebaut wie die in Figur 2 dargestellte Ausführungsform. Um einen Kern 81 sind sechs Drahtbündel angeordnet, welche jeweils einen Bündelkern 81.1...81.6 umfassen. Das Drahtbündel mit dem Bündelkern 81.1 umfasst weiter fünf äussere Drähte 82.1.1...82.1.5, welche unmittelbar um den Bündelkern angeordnet sind und eine Frostschutzeinrichtung 83.1, welche anstelle eines sechsten Drahtes am Bündelkern verläuft. Die Drahtbündel um die anderen Bündelkerne 81.2...81.6 sind gleich aufgebaut und umfassen jeweils ein Frostschutzelement 83.2...83.6 und fünf äussere Drähte. Da die Frostschutzelemente 83.1...83.6 jeweils anstelle eines der äusseren Drähte eines Drahtbündels in diesem Drahtbündel integriert sind, verlaufen sie periodisch um den Bündelkern 81.1...81.6 und liegen damit abschnittweise auf der äusseren Oberfläche des Seils bzw. am Kern 81 des Seils und in entsprechenden Zwischenpositionen.

Sowohl die Heizdrähte als auch die Frostschutzmittelleitungen können am Ende des eingespannten Seils (z. B. in der Berg- oder Talstation) mit einer Energiequelle, insbesondere einer Stromquelle, oder einer Frostschutzmittelpumpe verbunden werden. Die Energiequelle bzw. die Frostschutzmittelpumpe ermöglichen das Bedienen bzw. Betätigen der Frostschutzeinrichtung.

Figur 9 zeigt den Längsschnitt einer möglichen Ausführungsform eines Seils 91. Im Innern des Seils 91 verläuft eine Leitung 92, welche mit einer Stromquelle 94 einen Stromkreis bildet. Die Leitung 92 umfasst dabei einen Widerstand, welcher als Heizelement 93 fungiert. Das Heizelement 93 bildet zusammen mit der Leitung 92 ein Frostschutzelement. Die Leitung 92 umfasst einen ersten Teil 92.1 und einen zweiten Teil 92.2. Die beiden Teile 92.1 und 92.2 der Leitung 92 verlassen das Seil 91 an einem ersten Ende 96.1 und an einem zweiten Ende 96.2 des Seils 91. Der erste Teil 92.1 der Leitung 92 beinhaltet dabei das Heizelement 93. In dem in Figur 9 dargestellten Ausführungsbeispiel eines Seils ist der erste Teil 92.1 der Leitung 92 mit dem zweiten Teil 92.2 der Leitung zu einer durchgängigen Leitung 92 am zweiten Ende 96.2 des Seils 91 verbunden. Am ersten Ende 96.1 des Seils 91 sind die beiden Teile 92.1 und 92.2 mit den Kontakten 95.1 und 95.2 der Stromquelle 94 verbunden.

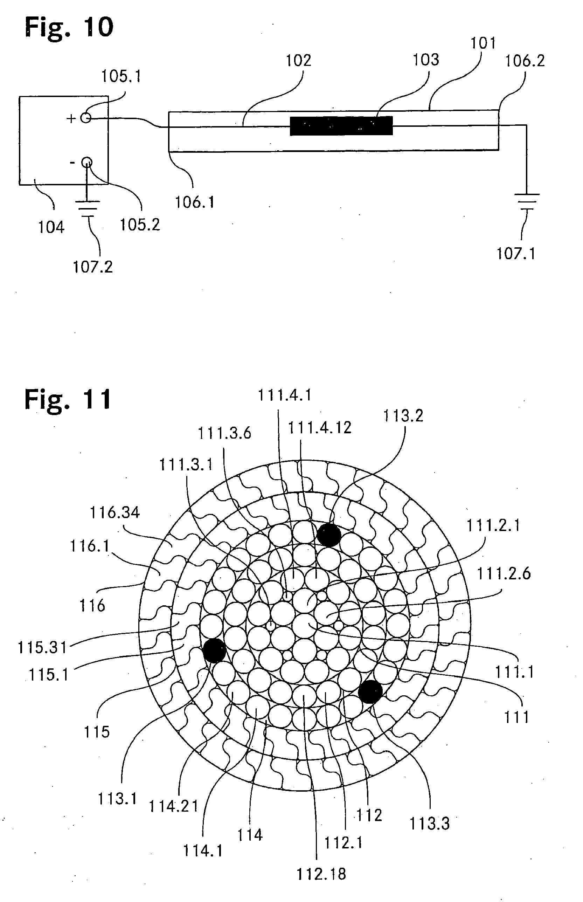

In Fig. 10 ist eine Variante von Fig. 9 dargestellt, wobei die Kontaktierung des Heizelements 103 an den beiden Enden 106.1, 106.2 des Seils 101 erfolgt. Dabei umfasst eine Leitung 102 im Innern des Seils 101 einen Widerstand, welcher als Heizelement 103 wirkt. Die Leitung 102 verlässt das Seil 101 an den beiden Enden 106.1, 106.2. Am ersten Ende 106.1 des Seils 102 ist die Leitung 102 mit einem ersten Kontakt 105.1 einer elektrischen Stromquelle 104 verbunden. Am zweiten Ende 106.2 ist die Leitung 102 an einen ersten Erdmassenkontakt 107.1 angeschlossen. Ebenso ist der zweite Kontakt 105.2 der elektrischen Stromquelle 104 mit einem zweiten Erdmassenkontakt 107.2 verbunden.

Wird zwischen den beiden Kontakten 105.1, 105.2 eine elektrische Spannung angelegt, fliesst ein Strom vom ersten Kontakt 105.1 über die Leitung 102 durch den Widerstand bzw. das Heizelement 103 zum ersten Erdmassenkontakt 107.1, welcher mit dem zweiten Erdmassenkontakt 107.2 elektrisch verbunden ist. Vom zweiten Erdmassenkontakt 107.2 gelangt der Strom über den zweiten Kontakt 105.2 zurück zur Stromquelle 104.

Fig. 11 zeigt ein weiteres erfindungsgemässes Seil, welches insbesondere als Tragseil für eine Seilbahn ausgelegt ist. Ein Kern 111 ist dabei als Parallel-Litze ausgebildet. Der Kern 111 weist einen zentralen und im Querschnitt kreisrunden Stahldraht 111.1 auf, welcher von insgesamt sechs Stahldrähten 111.2.1...111.2.6 gleichen Durchmessers umgeben ist, so dass sie am zentralen Stahldraht 111.1 aufliegen und zwei der jeweils benachbarten Stahldrähte 111.2.1 ... 111.2.6 berühren. Zwischen jeweils zwei der Stahldrähte 111.2.1 ... 111.2.6 sind aussen insgesamt sechs im Durchmesser kleinere Stahldrähte 111.3.1 ... 111.3.6 eingeordnet. Darum herum ist eine weitere Lage mit zwölf im Querschnitt kreisrunde Stahldrähten 111.4.1 ... 111.4.12 angeordnet, welche etwa einen gleichen Durchmesser aufweisen, wie der zentrale Stahldraht 111.1. Die Stahldrähte 111.4.1 ... 111.4.12 liegen dabei sowohl an den Stahldrähten 111.2.1 ... 111.2.6, als auch an den im Durchmesser kleineren Stahldrähten 111.3.1 ... 111.3.6 an. Diese Anordnung bildet den Kern 111.

Um den Kern 111 herum ist eine erste Aussenlage 112 aus achtzehn kreisrunden Drähten 112.1 ... 112.18 angeordnet, wobei sich benachbarte Drähte 112.1 ... 112.18 jeweils berühren. Ausserhalb der ersten Aussenlage 112 ist eine zweite Aussenlage 114 angebracht, welche aus insgesamt einundzwanzig kreisrunden Stahldrähten 114.1 ... 114.21 besteht. Innerhalb der zweiten Aussenlage 114 sind der normalen Stahldrähte ersetzt durch drei Frostschutzelemente 113.1 ... 113.3. Sie sind gleichmässig in der Lage verteilt (d.h. sie stehen in einer 120°-Anordnung zueinander) und bestehen beispielsweise aus im Querschnitt kreisrunden und elektrisch isolierten Heizdrähten , wobei diese den gleichen Durchmesser aufweisen, wie die Stahldrähte 114.1 ... 114.21 in der zweiten Aussenlage 114. Die Stahldrähte 112.1 ... 112. 18 in der ersten Aussenlage 112 und die Stahldrähte 114.1 ... 114. 21 in der zweiten Aussenlage 114 haben alle den gleichen Durchmesser wie der zentrale Stahldraht 111.1.

Ausserhalb der zweiten Aussenlage 114 ist des Weiteren eine erste Lage 115 aus 31 Profildrähten 115.1 ... 115. 31 mit einem S- bzw. Z-förmigem Querschnitt angeordnet. Die einzelnen Profildrähte 115.1 ... 115. 31 weisen dabei komplementäre Aussenformen auf und liegen lückenlos aneinander. Als äusserste Lage ist eine zweite Lage 116 aus vierunddreissig etwas grösseren Profildrähten 116.1 ... 116. 34 angebracht, welche ebenfalls einen S- bzw. Z -förmigem Querschnitt aufweisen und lückenlos aneinander liegen.

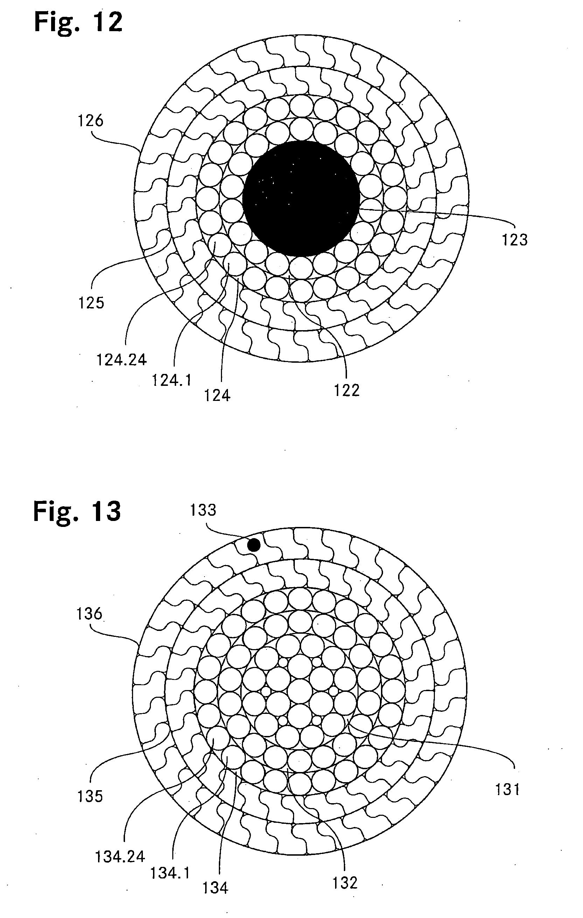

Anstelle des Kerns 111 in Fig. 11 weist das Seil in Fig. 12 einen Kern auf, welcher als Frostschutzelement 123 ausgebildet ist. Darum herum befindet sich wie beim Seil der Fig. 11 eine erste Aussenlage 122 aus achtzehn kreisrunden Stahldrähten. Die zweite Aussenlage 124 entspricht der zweiten Aussenlage aus Fig. 11, jedoch sind die drei Frostschutzelemente aus Fig. 11 in Fig. 12 durch drei gewöhnliche Stahldrähte ersetzt, so dass die zweite Aussenlage 124 insgesamt vierundzwanzig (24) identische Stahldrähte 124.1 ... 124.24 aufweist. Wie das Seil aus Fig. 11, weist das Seil aus Fig. 12 ebenfalls zwei Lagen 135, 136 aus Profildrähten mit S- Bzw. Z -förmigem Querschnitt auf.

Fig. 13 zeigt eine weitere Variante eines erfindungsgemässen Seils. Dieses entspricht im Wesentlichen dem Seil aus Fig. 11. Der Aufbau des Kerns 131 und der ersten Aussenlage 131 ist identisch mit dem Kern 111 und der ersten Aussenlage 112 des Seils aus Fig. 11. Die zweite Aussenlage 134 entspricht im Wesentlichen der zweiten Aussenlage aus Fig. 11, jedoch sind die drei Frostschutzelemente aus Fig. 11 in Fig. 12 durch drei gewöhnliche Stahldrähte ersetzt, so dass die zweite Aussenlage 124 insgesamt vierundzwanzig identische Stahldrähte 124.1 ... 124.24 aufweist. Die erste und die zweite Lage 135, 136 aus Profildrähten ist wiederum identisch mit der ersten und der zweiten Lage 115, 116 des Seils aus der Fig. 11. In einem der Profildrähte der zweiten Lage 136 ist jedoch ein Frostschutzelement 133, beispielsweise in Form eines Heizdrahts angebracht.

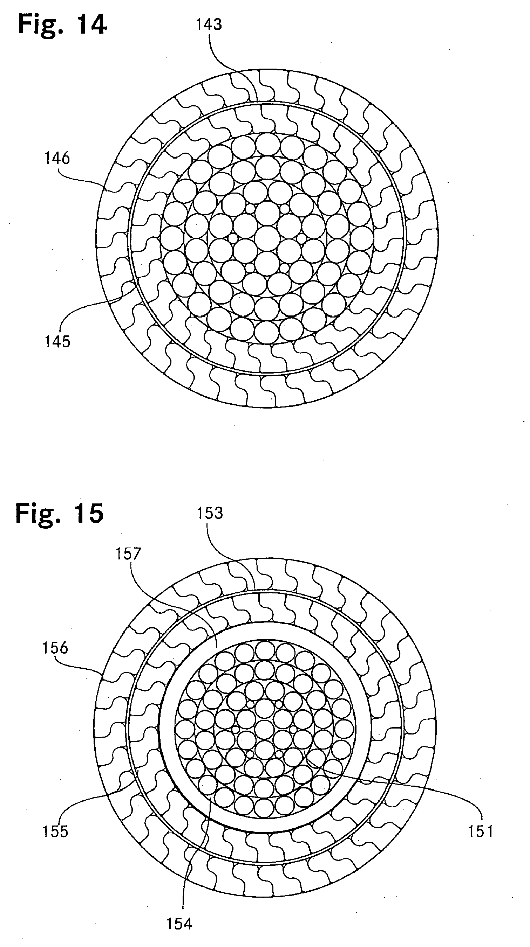

Das Seil aus Fig. 14 ist im Wesentlichen identisch mit dem Seil aus Fig. 13. Jedoch ist zwischen der ersten Lage 145 aus Profildrähten und der zweiten Lage 146 aus Profildrähten ein Frostschutzelement 143 in Form eines Drahtgeflechts angeordnet, welches entlang der gesamten Länge des Seils verläuft. Dieses umgibt die erste Lage 145 aus Profildrähten vollständig. Ein Frostschutzelement in einem der Profildrähte ist zudem nicht vorhanden.

In Fig. 15 ist ein weiteres Seil gezeigt, welches im Wesentlichen identisch ist mit dem Seil aus Fig. 14. Zusätzlich befindet sich aber zwischen der zweiten Aussenlage 154 aus Stahldrähten und der ersten Lage 155 aus Profildrähten ein Wärmedämmelement 157. Dieses ist beispielsweise aus einem Kunststoff oder einem fasrigen Material gefertigt und isoliert den inneren Teil des Seils thermisch vom äusseren Bereich mit dem Frostschutzelement 153 zwischen den beiden Lagen 155, 156 aus Profildrähten. Damit kann bei der Enteisung die Wärmeenergie gezielt auf die Aussenbereiche konzentriert werden, was den Energieverbrauch reduziert.

Die Frostschutzelemente können an verschiedensten Stellen im Seil integriert sein. Es können auch andere Anordnungen und Kombinationen der oben dargestellten Anordnungen vorgesehen sein. So ist es beispielsweise möglich, dass Frostschutzelemente sowohl in einer äusseren Litze als auch im Kern integriert sind. Eine wie in Figur 2 dargestellte Ausführung der einzelnen Elemente einer Litze als ein Kern 22.1 und äussere Drähte 22.1.1...22.1.6 kann die einfache Ausführung der Seilelemente (Kern, Aussenstränge) in jeder der Figuren ersetzen. Ebenfalls können Heizdrähte oder Drahtnetze auf andere Weise (z. B. in einer radial verlaufenden Symmetrieebene der Einlagen) in den Einlagen integriert sein. Dies ist zudem unabhängig davon, ob Heizdrähte auf der Oberfläche der Einlagen vorgesehen sind, ob Heizdrähte in der äusseren Litze oder anderen Teilen der Litzen oder im Kern integriert sind. Es kann auch eine Kombination verschiedenartiger Frostschutzelemente genutzt werden.

Es liegt auch im Rahmen der Erfindung, dass die elektrische Leitung an beiden Enden des Seils abgegriffen werden (wenn die Enden z. B. nahe beieinander gehalten sind) und an einer Stromquelle angeschlossen werden. Es können auch von den beiden Enden her elektrisch getrennte Heizelemente angesteuert werden.

Ein Drahtnetz kann auch als flächenhaftes Heizmedium zwischen zwei Lagen von Seilelementen vorgesehen sein. Punktuelle Brüche im Drahtnetz aufgrund der radial wirkenden Quetschkraft zwischen Drahtlitzen beeinträchtigen die Funktion eines solchen Heizelements nur unwesentlich.

In Fig. 11 können die drei Frostschutzelemente 113.1, 113.2, 113.3 auch durch Hohlleiter für Mikrowellen in Form von rechteckigen Röhren ersetzt werden, welche in Bereichen des Seils münden, welche aus Mikrowellen-absorbierenden Materialien bestehen.

Das Frostschutzelement 123 im Kern des Seils aus Fig. 12 kann beispielsweise auch als fluidleitender Schlauch oder als Rohr ausgebildet sein, welche von einem erwärmten Fluid durchflossen werden.

Das Frostschutzelement 133 aus Fig. 13, welches als Heizdraht in einem der Profildrähte integriert ist, kann auch durch ein Frostschutzelement mit der äusseren Form eines Profildrahts ersetzt werden.

In Fig. 13 können beispielsweise einer oder mehrere der Profildrähte der zweiten Lage 136 auch durch eine Profilleiste aus einem Mikrowellen-absorbierenden Material auf Silikon-, Urethan- oder Neopren-Basis ausgebildet sein. Ebenso ist es möglich eine entsprechende Profilleiste aus Materialien mit einem hohen Absorptionsvermögen für Infrarotstrahlung vorzusehen. Insbesondere organische Polymerverbindungen, wie z. B. Polyurethane oder Polyamide sind als Materialien für derartige Profilleisten geeignet.

Anstelle eines Frostschutzelements 143 aus Fig. 14, welches in Form eines Drahtgeflechts entlang der gesamten Länge des Seils verläuft, können auch streifen- bzw. ringförmige Abschnitte aus Drahtgeflecht und/oder blechartigen Flächenheizelemente vorgesehen werden. Diese können in regelmässigen Abständen entlang der gesamten Seillänge angebracht werden oder bloss an besonders exponierten Abschnitten des Seils, welche einer starken Eisbildung ausgesetzt sind.

Zur Technik der Kunststoffeinlagen wird auf die Patentschrift US 5,669,214 (Fatzer) verwiesen. Die Erfindung kann auch auf die dort beschriebenen Seile angewendet werden.

Wärmedämmelemente wie in Fig. 15 beschrieben, können auch in anderen Positionen des Seils angebracht werden, welche beispielsweise näher beim Kern 151 des Seils liegen, falls dies zweckmässig ist.

Zusammenfassend ist festzustellen, dass durch die Erfindung eine verlässliche, wartungsarme und effiziente Vorrichtung zur Verhinderung bzw. zum gezielten Entfernen von Eisbildung an einem Seil geschaffen wurde, welches Seil sich insbesondere als Tragseil für Seilbahnen eignet.

## Patentansprüche

1. Seil, insbesondere ein stehendes Seil für Seilbahnen, Seilbauwerke und/oder für die Energieübertragung, umfassend einen Kern (11) und mehrere den Kern umgebende Aussenstränge, **dadurch gekennzeichnet, dass** im Seil mindestens eine integrierte Frostschutzeinrichtung (13.1...13.6) vorgesehen ist, welche von einem Seilende her oder durch lokal in einen Mantelbereich des Seils eingekoppelte Strahlungsenergie aktivierbar ist.

2. Seil nach Anspruch 1, **dadurch gekennzeichnet, dass** die Frostschutzeinrichtung (13.1...13.6) ein in einem der Aussenstränge integriertes Frostschutzelement umfasst.

3. Seil nach Anspruch 1 oder 2, **dadurch gekennzeichnet, dass** die Frostschutzeinrichtung (53.1...53.3) ein in dem Kern (51) integriertes Frostschutzelement umfasst.

4. Seil nach einem der Ansprüche 1 bis 3, **dadurch gekennzeichnet, dass** es zwischen den Aussensträngen (72.1...72.6) Einlagen (74.1...74.6) aufweist und dass ein Frostschutzelement (73.1...73.6) in einer der Einlagen (74.1...74.6) integriert ist.

5. Seil nach einem der Ansprüche 1 bis 4, **dadurch gekennzeichnet, dass** die Frostschutzeinrichtung (63.1...63.24) als elektrische Widerstandsheizung ausgebildet ist.

6. Seil nach Anspruch 5, **dadurch gekennzeichnet, dass** die Frostschutzeinrichtung (63.1...63.24) als Widerstandsheizung ein heizbares Drahtgeflecht umfasst.

7. Seil nach einem der Ansprüche 4 bis 6, **dadurch gekennzeichnet, dass** die Einlagen (64.1...64.6) Abschnitte unterschiedlicher Wärmeleitfähigkeit aufweisen.

8. Seil nach einem der Ansprüche 5 bis 7, **dadurch gekennzeichnet, dass** die Frostschutzeinrichtung (63.1...63.24) Abschnitte unterschiedlichen elektrischen Widerstands aufweist.

9. Seil nach einem der Ansprüche 1 bis 4, **dadurch gekennzeichnet, dass** die Frostschutzeinrichtung (13.1...13.6) als Frostschutzmittelaustragvorrichtung ausgebildet ist.

10. Seil nach einem der Ansprüche 1 bis 9, **dadurch gekennzeichnet, dass** die Frostschutzeinrichtung (13.1...13.6) nur in ausgewählten Abschnitten des Seils vorgesehen ist.

11. Seil nach einem der Ansprüche 1 bis 10, **dadurch gekennzeichnet, dass** ein Wärmedämmelement (157) vorgesehen ist, welches das Seil, insbesondere in radialer Richtung, in einen inneren und einen äusseren Bereich aufteilt.

12. Seil nach Anspruch 11, **dadurch gekennzeichnet, dass** die Frostschutzvorrichtung im äusseren Bereich, ausserhalb des Wärmedämmelementes (157), angeordnet ist.

13. Seil nach einem der Ansprüche 1 bis 12, **dadurch gekennzeichnet, dass** als Frostschutzelement eine Drahtlage, insbesondere aus Aluminium integriert ist, welche induktiv heizbar ist.

14. Seil nach einem der Ansprüche 1 bis 13, **dadurch gekennzeichnet, dass** als Frostschutzelement ein Mikrowellen-absorbierendes Material integriert ist, insbesondere auf Silikon-, Urethan- oder Neopren-Basis.

15. Seil nach einem der Ansprüche 1 bis 14, **dadurch gekennzeichnet, dass** als Frostschutzelement ein Material mit einem hohen Absorptionsvermögen für Infrarotstrahlung integriert ist, bevorzugt organische Polymerverbindungen und insbesondere Polyurethane oder Polyamide.
